# EUROPÄISCHE PATENTSCHRIFT

(11) **EP 2 188 111 B1**
(45) Veröffentlichungstag und Bekanntmachung des Hinweises auf die Patenterteilung: **04.05.2011**
(21) Anmeldenummer: 08801219.0
(22) Anmeldetag: 23.08.2008
(51) Int. Cl.: B29C 55/20, B65H 20/16, B65H 23/028

(54) **KLUPPENEINHEIT ZUR ANORDNUNG AN EINER FÖRDEREINRICHTUNG BEIM BEHANDELN VON MATERIALBAHNEN, FÖRDEREINRICHTUNG ZUM TRANSPORTIEREN VON MATERIALBAHNEN UND SPANNRAHMEN ZUM QUERDEHNEN VON KUNSTSTOFF-FOLIEN**
CLIP UNIT FOR ARRANGING ON A CONVEYING MECHANISM WHEN HANDLING MATERIAL WEBS, CONVEYING MECHANISM FOR TRANSPORTING MATERIAL WEBS AND CLAMPING FRAME FOR TRANSVERSELY STRETCHING FILMS OF PLASTIC
ENSEMBLE PINCE DESTINÉ À ÊTRE MONTÉ SUR UN DISPOSITIF DE TRANSPORT LORS DU TRAITEMENT DE BANDES DE MATIÈRE, DISPOSITIF DE TRANSPORT DESTINÉ A TRANSPORTER DES BANDES DE MATIÈRE ET CADRE TENDEUR DESTINÉ À ÉTIRER TRANSVERSALEMENT DES FEUILLES DE MATIÈRE SYNTHÉTIQUE

(30) Priorität: 05.09.2007 DE 102007042064
(43) Veröffentlichungstag der Anmeldung: 26.05.2010
(73) Patentinhaber: Lindauer Dornier Gesellschaft mbH, 88129 Lindau (DE)
(72) Erfinder: URBANZYK, Kai, 88138 Weissensberg (DE)
(86) Internationale Anmeldenummer: PCT/DE2008/001396
(87) Internationale Veröffentlichungsnummer: WO 2009/030195

(56) Entgegenhaltungen:
- EP-A- 0 410 494
- DE-B- 1 114 460
- GB-A- 991 245
- GB-A- 2 159 186
- US-A- 3 054 159
- US-A- 3 120 688

## Beschreibung

Die Erfindung betrifft eine Kluppeneinheit zur Anordnung an einer Fördereinrichtung beim Behandeln von Materialbahnen, mit einem Basisteil, mit einem an dem Basisteil schwenkbar gelagerten Klemmhebel, der durch Verschwenken wahlweise seine Klemmstellung oder seine Freigabestellung einnimmt, wobei die Materialbahn nur in der Klemmstellung an dem Basisteil festgeklemmt ist und zwischen dem Basisteil und dem Klemmhebel zusätzlich magnetisch erzeugte Kräfte zur Wirkung kommen, gemäß dem Oberbegriff des Anspruchs 1.

Kluppeneinheiten dieser Art sind aus der US-A-3 120 688, der DE 36 29 508 A1 und der GB 991 245 A bekannt.

Die zu behandelnden Materialbahnen können Textilbahnen, besonders Gewebebahnen beim Trocknen oder anderen Vorgängen der Textilveredlung, aber auch Folien und ähnliche flexible Materialien sein. Ein typisches Anwendungsgebiet derartiger Kluppeneinheiten findet sich bei der Herstellung von Kunststoff-Folien, vgl. die Firmenschrift "film Stretching Machines" mit der Drucknummer 13006/LD10/04 der Lindauer Dornier GmbH in Lindau. Die Folienbahn wird nach dem Extrudieren erst in Längsrichtung und dann in Querrichtung gedehnt. Zum Querdehnen durchläuft die Folienbahn einen Spannrahmen zwischen zwei in einer waagerechten Ebene umlaufenden endlosen Längsförderern in Form von Ketten, an denen sich in dichter Anordnung die Kluppeneinheiten befinden. Diese ergreifen klemmend die Ränder der Folienbahn, ziehen sie straff und transportieren sie in ihrer Längsrichtung. Indem der Abstand zwischen den Längsförderern sich während des Transports vergrößert, wird die Folienbahn in ihrer Querrichtung in der erforderlichen Weise gedehnt. Eine Kluppeneinheit muss dabei Kräfte von bis zu 3500 N übertragen, und das bei Temperaturen von 100 bis 280°C und Fördergeschwindigkeiten von bis zu 500 m/min und mehr.

Die Kluppeneinheiten müssen daher sehr zuverlässig arbeiten; das Verschwenken des Klemmhebels, der wegen seiner Längen-Erstreckung in der Praxis auch "Klappe" genannt wird, zwischen seinen Endstellungen, also aus der Freigabestellung in die Klemmstellung und umgekehrt, muss sehr exakt erfolgen, und die einmal erreichte Endstellung muss zuverlässig eingehalten werden. Dazu wird die Forderung gestellt, dass der Klemmhebel sich in seiner Freigabestellung befinden soll, wenn keine Materialbahn in der Kluppeneinheit eingeklemmt ist. Das ist von besonderer Bedeutung, wenn die Kluppeneinheiten leer vom Auslass zum Einlass des Spannrahmens zurücklaufen. In der Freigabestellung des Klemmhebels wird der Verschleiß der Klemmflächen am Klemmhebel und am Basisteil der Kluppeneinheit verhindert. Außerdem lassen sich die Materialbahn oder losgelöste Materialreste besser aus der Kluppeneinheit entfernen, wenn der Klemmhebel schnell und zuverlässig in seine Freigabestellung übergeht und dort verbleibt. Die Problematik verschärft sich, wenn die Umlaufgeschwindigkeit der Längsförderer sehr hoch und die Zeit für einen Umlauf kurz ist, so dass die Kluppeneinheiten in schnellem Wechsel öffnen und schließen müssen.

Der Klemmhebel von Kluppeneinheiten gemäß dem Stand der Technik hat meistens eine Grundstellung, die er selbsttätig einnimmt; das ist meistens die Klemmstellung. Sie kann sich durch Schwerkraft oder Federkraft einstellen. Der Klemmhebel hat ferner einen Betätigungsarm, der beim Umlauf der Längsförderer von Steuereinrichtungen beeinflusst wird, wie zum Beispiel Kulissenführungen, Steuerrollen oder Magneten, die ortsfest am Gestell der Fördereinrichtung befestigt sind, vgl. hierzu die DE 195 19 095 A1. Über den Betätigungsarm wird der gesamte Klemmhebel ausgelenkt und in die Freigabestellung überführt.

Um eine Endstellung des Klemmhebels zu sichern, ist auch schon die Anordnung von Haftmagneten vorgeschlagen worden, die zwischen dem Basisteil der Kluppeneinheit und dem Klemmhebel angeordnet werden. Gemäß der US-A-3 120 688 soll der Klemmhebel durch Schwerkraft in seine Klemmstellung fallen und durch eine Kulissensteuerung in seine Freigabestellung überführt werden. Zur Sicherung der Klemmstellung ist an dem Betätigungsarm des Klemmhebels ein Permanentmagnet befestigt, der in der Klemmstellung des Betätigungshebels stumpf an einen zweiten Magneten (oder eine Ankerplatte) stößt, der sich an dem Basisteil befindet. Die erhebliche Haltekraft der beiden magnetischen Teile muss beim Lösen des Klemmhebels überwunden werden, und der Klemmhebel bleibt nur so lange in seiner Freigabestellung, wie er unter dem Einfluss der ihn steuernden Kulisse steht.

Eine ähnliche Ausführung zeigt die DE 36 29 508 A1. In dieser ist eine Kluppeneinheit für eine Spannrahmenkette beschrieben, bei der an einem Basisteil ein zweiarmiger Klemmhebel schwenkbar befestigt ist. Dieser Klemmhebel hat einen Wirkarm, der in der Klemmstellung des Klemmhebels die Materialbahn an dem Basisteil festklemmt. Der entgegengesetzte Betätigungsarm des Klemmhebels ist als magnetisches Ankerteil für einen Permanentmagneten ausgebildet, der an dem Basisteil befestigt ist. Der schwenkbare Klemmhebel fällt zunächst infolge Schwerkraft in seine Klemmstellung. Zusätzlich wirkt der an dem Basisteil befestigte Permanentmagnet. Gemäß der DE 36 29 508 A1 sollte die Aufgabe gelöst werden, die Magnetkraft des Permanentmagneten über einen größeren Schwenkbereich des Kluppenhebels nahezu konstant zu halten. Zu diesem Zweck ist das magnetische Ankerteil der Kluppeneinheit nicht nur als ebene Platte ausgebildet, die an die Stirnseite des Permanentmagneten anschlagen soll. Vielmehr hat das magnetische Ankerteil auch Randteile, die sich senkrecht zur Stirnfläche des Permanentmagneten und damit etwa in der Schwenkrichtung des Klemmhebels erstrecken. Diese Randteile können den Permanentmagneten seitlich über einen Teilbereich seines Umfangs oder vollständig umfassen. Bei der Schwenkbewegung des Klemmhebels bewegen sich die Randteile mit einem bestimmten Luftspalt seitlich über den Magneten hinweg. Da die Größe des Luftspalts bei dieser Bewegung im Wesentlichen unverändert bleibt, ergibt sich somit eine Anziehungskraft zwischen Klemmhebel und Basisteil, wenn sich der Klemmhebel mit dem Ankerteil noch in einigem Abstand von dem Permanentmagnet befindet. Die Überführung des Klemmhebels in seine Klemmstellung wird dadurch zusätzlich unterstützt, bevor die unmittelbare Auswirkung der Magnetkraft zwischen der Stirnfläche des Permanentmagneten und der entsprechenden Gegenfläche des Ankerteils zustande kommt.

Eine umgekehrte Anordnung zeigt die GB 991 245 A. Der Klemmhebel fällt hier unter dem Einfluss der Schwerkraft in seine Klemmstellung und soll diese ohne jede weitere Verstärkung einhalten. Zum Überführen in seine Freigabestellung wird der Klemmhebel unter dem Einfluss einer gestellfesten Kulisse angehoben und in Berührung mit einem Haltemagneten gebracht, der den Klemmhebel dauernd festhält. Zum Zurückführen in die Klemmstellung muss der Haltemagnet durch einen besonderen Mechanismus aus dem Bereich des Klemmhebels entfernt werden, der durch einen Anschlag daran gehindert ist, dem Haltemagneten zu folgen. Der Klemmhebel fällt danach wieder unter dem Einfluss der Schwerkraft in seine Klemmstellung zurück. Bei der Kluppeneinheit gemäß der GB 991 245 wird der Klemmhebel zwar durch Magnetkraft in seiner Freigabestellung gehalten; es ist aber ein zusätzlicher Mechanismus für das Lösen des Haltemagneten erforderlich, und für die Sicherung der Klemmstellung ist nichts vorgesehen; zudem sind auch hier erhebliche Stellkräfte erforderlich, um den Klemmhebel aus seiner Freigabestellung zu lösen.

Die Kluppeneinheiten gemäß der US-A-3 120 688, der DE 36 29 508 A1 und der GB 991 245 A sind als Stand der-Technik gemäß dem Oberbegriff des Anspruchs 1 berücksichtigt. Der Erfindung liegt die Aufgabe zugrunde, eine Kluppeneinheit dieser Art zu schaffen, bei der der Wechsel zwischen Klemmstellung und Freigabestellung schnell und zuverlässig erfolgt, die einmal erreichte Stellung zuverlässig eingehalten wird und die dennoch einfach und kompakt aufgebaut ist und dadurch ein geringes Gewicht hat.

Die Lösung dieser Aufgabe erfolgt erfindungsgemäß durch die Gesamtheit der Merkmale des Anspruchs 1. Bei einer Kluppeneinheit gemäß dem Oberbegriff des Anspruchs 1 wird somit vorgesehen, dass an dem Klemmhebel mindestens ein Klemmhebel-Magnet und an dem Basisteil mindestens ein Basisteil-Magnet angeordnet ist und dass der Drehweg des Klemmhebel-Magneten beim Verschwenken des Klemmhebels berührungsfrei an dem Basisteil-Magneten entlang führt, wobei der Klemmhebel-Magnet und der Basisteil-Magnet einander magnetisch abstoßen und das Maximum der Abstoßungskraft im Bereich zwischen der Klemmstellung und der Freigabestellung gelegen ist.

Im Gegensatz zum Stand der Technik wird bei der erfindungsgemäßen Kluppeneinheit nicht mit magnetischer Anziehung, sondern mit magnetischer Abstoßung gearbeitet. Indem der Klemmhebel-Magnet dem Basisteil-Magnet beweglich gegenübersteht, wird er mit Sicherheit in die vorgesehene Endstellung gestoßen und dort zuverlässig gehalten. Es gibt für die Bewegung des Klemmhebel-Magneten eine neutrale Achse oder Totpunkt-Stellung, wenn sich nämlich die beiden Magnete genau gegenüber stehen. Die Stellung in dieser neutralen Achse ist jedoch labil, weil schon die kleinste Bewegung ausreicht, den Klemmhebel verstärkt in die eine oder andere Endstellung zu führen. Wenn also dem Klemmhebel durch einen Anstoß von außen die entscheidende Richtung vorgegeben wird, muss er mit Sicherheit in die ihm zugeordnete Endstellung übergehen.

Die Lage der neutralen Achse oder Totpunkt-Stellung, in der sich die beiden Magnete mit größter möglicher Überdeckung gegenüber stehen, wird man in vielen Fällen so legen, dass sie sich genau mittig zwischen den Endstellungen des Klemmhebels befindet. Dann ist sowohl für die Klemmstellung als auch für die Freigabestellung dieselbe Haltekraft gegeben. Es ist aber auch möglich, die Lage der neutralen Achse zu der einen oder anderen Endstellung hin zu verschieben, sodass beispielsweise die Haltekraft in der Freigabestellung größer ist als die Haltekraft in der Klemmstellung des Klemmhebels.

Dazu reichen bereits zwei Magnete aus; zur Verstärkung können aber auch mehrere gleichwirkende Magnete vorgesehen werden.

Der Klemmhebel wird somit in seiner Klemmstellung oder Freigabestellung in jedem Fall zuverlässig gehalten, indem er durch die magnetische Abstoßung gegen Anschläge gedrückt wird. Die Haltekraft ist aber nicht so groß, als wenn Haftmagnete durch Berührung aufeinander einwirken. Bei der erfindungsgemäßen Kluppeneinheit können die Einbaulage und die magnetische Haltekraft der beiden Magnete so auf einander abgestimmt werden, dass einerseits eine zuverlässige Haltekraft in den Endstellungen gewährleistet ist, andererseits aber das Lösen aus einer Endstellung keinen unnötig hohen Kraftaufwand erfordert.

Gemäß einer vorteilhaften Weiterbildung sind der Klemmhebel-Magnet und der Basisteil-Magnet beide als Permanentmagnete ausgebildet, weil das besonders wirtschaftlich und betriebssicher ist.

Wenn gemäß einer anderen vorteilhaften Weiterbildung vorgesehen ist, dass der Klemmhebel durch ein mechanisches Stellglied von außen unter Übersteuern der magnetischen Kräfte verschwenkbar ist, so wird dadurch zum Ausdruck gebracht, dass die magnetische Beeinflussung des Klemmhebels noch durch eine zusätzliche Verstellkraft ergänzt wird, damit die neutrale Achse zuverlässig in der gewünschten Richtung verlassen werden kann.

Eine einfache konstruktive Ausbildung der erfindungsgemäßen Kluppeneinheit besteht darin, dass der Klemmhebel als zweiarmiger Hebel mit einer Nabe, einem das mechanische Stellglied bildenden Betätigungsarm und einem Wirkarm ausgebildet ist, der endseitig eine Klemmfläche aufweist, die mit einer an dem Basisteil befindlichen Klemmfläche zum Einspannen der Materialbahn zusammenwirkt. Diese Ausbildung ist die Grundlage für eine einfache mechanische Konstruktion.

Da nämlich in der Grundform nur zwei Magnete erforderlich sind und die Magnetkraft nicht übermäßig hoch sein muss, kann gemäß einer weiteren vorteilhaften Ausgestaltung der Klemmhebel-Magnet an der Nabe des Klemmhebels angeordnet sein. Obwohl dort der Drehweg verhältnismäßig kurz ist, reicht diese Anordnung für eine zuverlässige Funktion der erfindungsgemäßen Kluppeneinheit vollständig aus.

Eine besonders kompakte Ausbildung wird gemäß einer weiteren Ausgestaltung dadurch erzielt, dass der Klemmhebel mit seiner Nabe auf einer Tragachse gelagert ist, die sich drehfest an dem Basisteil befindet und in ihrem Inneren den Basisteil-Magnet aufnimmt, während der Klemmhebel-Magnet in die Nabe eingelassen ist. Auf diese Weise sind die beiden Magnete auch besonders geschützt untergebracht.

Eine mechanisch einfachere Unterbringung der Magnete kann darin bestehen, dass der Basisteil-Magnet in radialer Richtung außerhalb des Drehweges des Klemmhebel-Magneten an dem Basisteil angeordnet ist.

Die Erfindung betrifft auch eine Fördereinrichtung zum Transportieren von Materialbahnen, mit paarweise angeordneten endlosen Längsförderern, an denen sich Kluppeneinheiten zum randseitigen Halten der Materialbahnen befinden. Derartige Fördereinrichtungen sind beispielsweise in der DE 36 29 508 A1, der GB 991 245 A und in der eingangs genannten Firmenschrift "Film Stretching Machines" beschrieben. Dabei wird erfindungsgemäß vorgesehen, dass bei diesen Fördereinrichtungen die Kluppeneinheiten nach einem der Ansprüche 1 bis 7 ausgebildet sind.

Eine derartige Fördereinrichtung verwertet sämtliche durch die erfindungsgemäße Kluppeneinheit entstehenden Vorteile.

Die Erfindung bezieht sich auch auf einen Spannrahmen zum Querdehnen von Kunststoff-Folien, mit einer Fördereinrichtung, an der sich Kluppeneinheiten befinden, durch welche die Kunststoff-Folien an ihren Seitenrändern erfasst und einer Zugkraft ausgesetzt werden, die quer zu ihrer Transportrichtung verläuft. Derartige Spannrahmen gehen wieder aus der DE 36 29 508 A1 sowie aus der Firmenschrift "Film Stretching Machines" hervor. Dabei werden erfindungsgemäß Kluppeneinheiten nach einem der Ansprüche 1 bis 7 und eine Fördereinrichtung gemäß Anspruch 8 vorgesehen.

Die Erfindung wird anschließend anhand von Zeichnungen noch näher erläutert. In den Figuren ist das Folgende dargestellt:
Fig. 1 ist ein seitlicher Schnitt durch eine Kluppeneinheit gemäß einer ersten Ausführungsform der Erfindung, wobei sich der Klemmhebel in seiner Freigabestellung befindet.
Fig. 2 ist eine der Fig. 1 entsprechende Darstellung, wobei der Klemmhebel in seiner Klemmstellung gezeigt ist.
Fig. 3 zeigt mehrere Kluppeneinheiten gemäß den Fig. 1 und 2 in einer Ansicht von vorn.
Fig. 4 ist ein seitlicher Schnitt durch eine Kluppeneinheit gemäß einer zweiten Ausführungsform der Erfindung, wobei sich der Klemmhebel in seiner Freigabestellung befindet.
Fig. 5 ist eine der Fig. 4 entsprechende Darstellung, wobei der Klemmhebel in seiner Klemmstellung gezeigt ist.

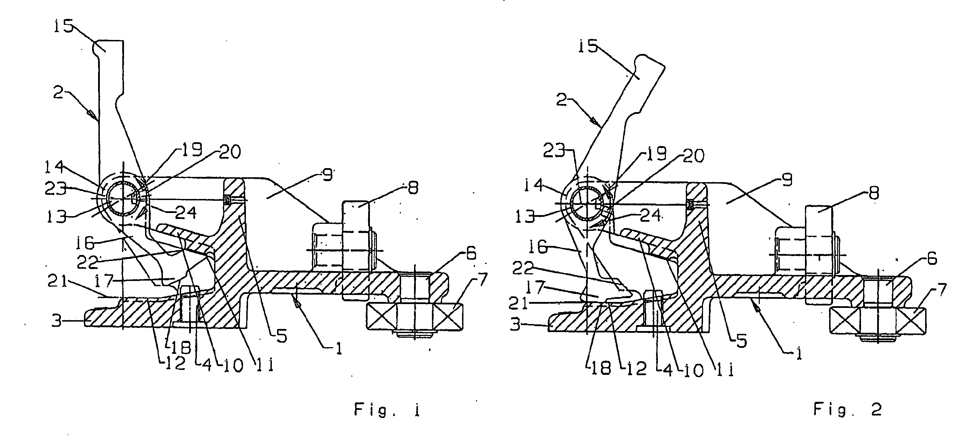

Die in Fig. 1 gezeigte Kluppeneinheit ist Teil eines Kettengliedes; sie gehört zu einer endlosen umlaufenden Förderkette, die hier einen Längsförderer 25 bildet. Die Förderkette läuft in einer waagerechten Ebene um; der Schnitt der Fig. 1 ist senkrecht durch die Förderkette gelegt.

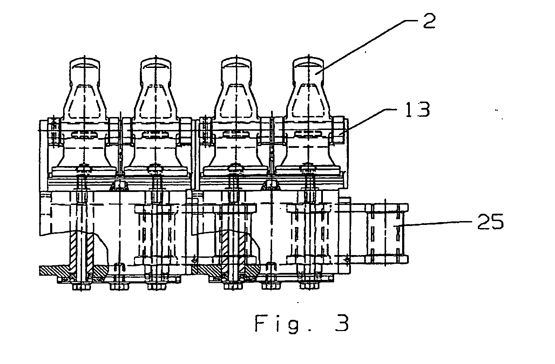

Die Kluppeneinheit besteht aus einem Basisteil 1 mit einem Klemmhebel 2, der wegen seiner länglichen Erstreckung in der Praxis vielfach auch als "Klappe" bezeichnet wird. Das Basisteil weist eine in der Einbaulage sich horizontal erstreckende Grundplatte 3 auf, in der sich eine Gewindebohrung 4 befindet. Diese dient dazu, das Basisteil 1 mit einem weiteren Bestandteil des Kettengliedes zusammen zu schrauben, vgl. Fig. 3. Von dem Basisteil 1 erstreckt sich eine Stegwand 5 senkrecht nach oben. An dem in Fig. 1 rechts befindlichen äußeren Ende des Basisteils 1 ist eine erste Laufrolle 7 auf einem Lagerbolzen 6 gelagert. Die erste Laufrolle 7 dient dazu, den axialen Zug aufzunehmen, der im Betrieb von einer eingespannten Materialbahn 21 ausgeübt wird.

Eine zweite Laufrolle 8 ist mit waagerecht verlaufender Achse ebenfalls an dem Basisteil 1 drehbar gelagert. Mit der Laufrolle 8 wird das Gewicht des gesamten Kettengliedes auf einer Laufbahn abgestützt, die zu der Fördereinrichtung gehört.

Die aufrecht stehende Stegwand 5 ist durch Wangen 9 an dem Basisteil 1 versteift. Die Stegwand 5 weist einen Ansatz 10 auf, der eine Anschlagfläche 11 für den Klemmhebel 2 ausbildet. Weiter ist an dem Basisteil 1 eine Klemmfläche 12 ausgebildet, auf der der Rand der Materialbahn 21 beim Einklemmen zu liegen kommt. Eine hohle Tragachse 13 ist drehfest in dem Basisteil 1 befestigt.

Der Klemmhebel 2 hat eine Nabe 14, von dem ein Betätigungsarm 15 und ein Wirkarm 16 abstehen. Der Klemmhebel 2 bildet somit einen zweiarmigen Hebel und ist mit der Nabe 14 auf der hohlen Tragachse 13 schwenkbar gelagert. An seinem unteren Ende ist der Wirkarm 16 mit einem verstärkten Klemmkopf 17 versehen. An diesem ist die hebelseitige Anschlagfläche 22 ausgebildet, die in der Freigabestellung des Klemmhebels 2 an der Anschlagfläche 11 des Basisteils 1 zur Anlage kommt. Weiter ist an dem Klemmkopf 17 die hebelseitige Klemmfläche 18 vorgesehen, die mit der Klemmfläche 12 am Basisteil 1 zusammenwirkt.

Im Betrieb wird der Klemmhebel 2 aus der in Fig. 1 gezeigten Freigabestellung in seine Klemmstellung gemäß Fig. 2 gebracht, indem er um die hohle Tragachse 13 verschwenkt. Es sei angenommen, dass der Klemmhebel 2 zunächst die Freigabestellung gemäß Fig. 1 einnimmt. Wenn eine Materialbahn 21 eingeklemmt werden soll, so muss diese zunächst mit ihren Rändern auf die Klemmfläche 12 des Basisteils 1 gebracht werden. Sodann greifen Steuereinrichtungen wie z. B. Kulissen, Steuerrollen oder Magnetkräfte von Magneten, die an dem Maschinengestell angebracht sind, an dem Betätigungsarm 15 des Klemmhebels 2 an, und die Materialbahn 21 wird zwischen der hebelseitigen Klemmfläche 18 und der Klemmfläche 12, die sich an dem Basisteil 1 befindet, festgeklemmt.

Die umlaufende Förderkette kann sehr dicht mit Kettengliedern besetzt sein, von denen die dargestellte Kluppeneinheit die obere Hälfte bildet. Indem die Führungsschienen für die Förderkette in der Förderrichtung divergieren, kann erheblicher Zug seitlich auf die Materialbahn 21 ausgeübt und diese gestreckt werden. Unter dem Einfluss der Zugkräfte entfaltet der Klemmhebel 2 eine selbstverstärkende Wirkung, und der Klemmhebel 2 bleibt in der Klemmstellung. Wenn die Kettenglieder dagegen leer zurücklaufen, sollen die Klemmhebel 2 mit Sicherheit ihre Freigabestellung einnehmen, weil nur auf diese Weise Verschmutzungen aus der Kluppeneinheit leicht und sicher entfernt werden können und weil dabei die Klemmflächen 12 und 18 nicht unnötig belastet werden.

Es ist also erforderlich, dass der Klemmhebel 2 einer Kluppeneinheit mit Sicherheit von der Klemmstellung in die Freigabestellung und umgekehrt übergeht und dann auch zuverlässig in der gewünschten Stellung verbleibt. Deshalb ist an dem Basisteil 1 ein Basisteil-Magnet 19 und an dem Klemmhebel 2 ein Klemmhebel-Magnet 20 vorgesehen. In dem Ausführungsbeispiel nach den Figuren 1 bis 3 befindet sich der Basisteil-Magnet 19 im Inneren der hohlen Tragachse 13. Der Klemmhebel-Magnet 20 ist in die Nabe 14 des Klemmhebels 2 eingelassen. Die Polung der beiden Magnete 19, 20 ist dabei so gewählt, dass die Magnete 19, 20 sich gegenseitig abstoßen.

Die Anordnung ist so getroffen, dass der Basisteil-Magnet 19 am Drehweg 24 des Klemmhebel-Magneten 20 liegt. Beim Verschwenken muss somit der Klemmhebel-Magnet 20 an dem Basisteil-Magnet 19 vorbeigeführt werden, ohne ihn zu berühren. Hierbei gibt es eine herausgehobene Stellung, in der sich die beiden Magneten 19, 20 genau gegenüber stehen. Diese Stellung bildet die neutrale Achse 23 oder den Totpunkt der Vorrichtung. Zwar ist hier die gegenseitige Abstoßung am stärksten, aber es gibt zumindest theoretisch keine Komponente der magnetischen Kräfte, die in der Drehrichtung wirkt. In der Praxis ist die neutrale Achse jedoch labil, weil schon die kleinste Bewegung ausreicht, den Klemmhebel 2 verstärkt in die eine oder andere Endstellung zu führen. Die Drehbewegung ist dann durch die Anschlagflächen 11 und 22 bzw. durch die Klemmflächen 12 und 18 begrenzt.

Ersichtlich führt die Anordnung von zwei sich gegenseitig abstoßenden Magneten 19, 20 dazu, dass der Klemmhebel 2 mit Sicherheit eine seiner beiden Endstellungen erreicht und dort auch zuverlässig gehalten ist. Die gewünschte Richtung der Verstellung wird dadurch gegeben, dass auf den Betätigungsarm 15 des Klemmhebels 2 mit ausreichender Stärke eine Verstellkraft durch eine Kulisse oder dergl. ausgeübt wird. Auf diesen Verstell-Impuls hin geht der Klemmhebel 2 in seine entgegengesetzte Einstellung über. Für den Rücklauf der endlos umlaufenden Kluppeneinheit mit in der Freigabestellung befindlichen Klemmhebel 2 können die Magnetkräfte ausreichen; zusätzliche Kulissen können entfallen, wodurch baulicher Aufwand und Verschleiß verringert werden.

Die Kluppeneinheit nach den Fig. 1 bis 3 ist nicht nur sehr einfach aufgebaut, sondern die zusätzliche magnetische Steuereinrichtung ist auch Platz sparend untergebracht. Die beiden Magnete 19, 20 sind zudem zuverlässig vor Schmutz oder Beschädigungen geschützt.

Die Fig. 3 zeigt vier nebeneinander liegende Kluppeneinheiten gemäß den Fig. 1 und 2 in einer Ansicht von vorn, also in einer Darstellung, die um 90° zu den Schnitten gemäß Fig. 1 und 2 versetzt ist. Die Kluppeneinheiten liegen sehr dicht nebeneinander und befinden sich über den in einer waagerechten Ebene umlaufenden Längsförderern 25. Es wird auch erkennbar, dass parallel zu dem Längsförderer 25 verlaufende Kulissen oder Betätigungseinrichtungen mit Rollen zum Verschwenken der Klemmhebel 2 führen und damit den Übergang von der Klemmstellung in die Freigabestellung und umgekehrt auslösen.

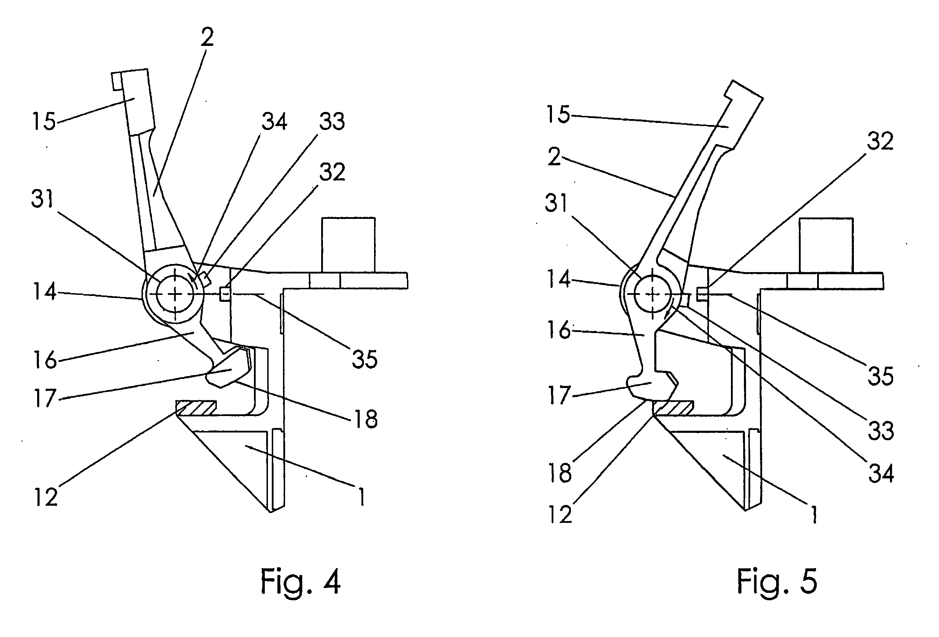

In den Fig. 4 und 5 ist eine weitere Ausführung der erfindungsgemäßen Kluppeneinheit gezeigt. Das Basisteil 1 ist dabei zwar in seiner äußeren Gestaltung gegenüber der ersten Ausführung verändert, aber die Funktion ist grundsätzlich dieselbe. Deswegen sind funktional unverändert wirkende Teile der Ausführung nach den Fig. 4 und 5 mit denselben Bezugsziffern versehen wie in der Ausführung nach den Fig. 1 bis 3. Unterschiedlich gegenüber der ersten Ausführung ist vor allem, dass die mit dem Basisteil 1 fest verbundene Tragachse 31 nicht mehr hohl, sondern als Vollmaterial ausgebildet ist. Der Klemmhebel-Magnet 33 sitzt in diesem Fall außen an der Nabe 14 des Klemmhebels 2, und der Basisteil-Magnet 32 ist diesem gegenüberliegend außen an dem Basisteil 1 angeordnet. Auch hier liegt jedoch der Basisteil-Magnet 32 am Drehweg 34 des Klemmhebel-Magneten 33, wobei gemäß sämtlichen Ausführungen die beiden Magnete 19, 20 und 32, 33 bei Verschwenken des Klemmhebels 2 zwar sehr dicht aneinander vorbeigeführt werden, sich aber gegenseitig nicht berühren.

Die neutrale Achse, in der sich der Basisteil-Magnet 32 und der Klemmhebel-Magnet 33 mit größter gegenseitiger Überdeckung gegenüber stehen, ist in den Fig. 4 und 5 mit 35 bezeichnet.

Die Ausführungsform nach den Fig. 4 und 5 hat den Vorteil einer größeren konstruktiven Einfachheit, dafür liegen die Magneten 32 und 33 nicht so geschützt wie bei dem Ausführungsbeispiel gemäß den Fig. 1 bis 3.

## Patentansprüche

1. Kluppeneinheit zur Anordnung an einer Fördereinrichtung beim Behandeln von Materialbahnen (21), mit einem Basisteil (1), mit einem an dem Basisteil (1) schwenkbar gelagerten Klemmhebel (2), der durch Verschwenken wahlweise seine Klemmstellung oder seine Freigabestellung einnimmt, wobei die Materialbahn (21) nur in der Klemmstellung an dem Basisteil (1) festgeklemmt ist und zwischen dem Basisteil (1) und dem Klemmhebel (2) zusätzlich magnetisch erzeugte Kräfte zur Wirkung kommen,
**dadurch gekennzeichnet, dass** an dem Klemmhebel (2) mindestens ein Klemmhebel-Magnet (20, 33) und an dem Basisteil (1) mindestens ein Basisteil-Magnet (19, 32) angeordnet ist und dass der Drehweg (24, 34) des Klemmhebel-Magneten (20, 33) beim Verschwenken des Klemmhebels (2) berührungsfrei an dem Basisteil-Magneten (19, 32) entlang führt, wobei der Klemmhebel-Magnet (20, 33) und der Basisteil-Magnet (19, 32) einander magnetisch abstoßen und das Maximum der Abstoßungskraft im Bereich zwischen der Klemmstellung und der Freigabestellung gelegen ist.

2. Kluppeneinheit nach Anspruch 1, **dadurch gekennzeichnet, dass** Klemmhebel-Magnet (20, 33) und Basisteil-Magnet (19, 32) als Permanentmagnete ausgebildet sind.

3. Kluppeneinheit nach Anspruch 1 oder 2, **dadurch gekennzeichnet, dass** der Klemmhebel (2) durch ein mechanisches Stellglied von außen unter Übersteuern der magnetischen Kräfte verschwenkbar ist.

4. Kluppeneinheit nach einem der Ansprüche 1 bis 3, **dadurch gekennzeichnet, dass** der Klemmhebel (2) als zweiarmiger Hebel mit einer Nabe (14), einem das mechanische Stellglied bildenden Betätigungsarm (15) und einem Wirkarm (16) ausgebildet ist, der endseitig eine Klemmfläche (18) aufweist, die mit einer an dem Basisteil (1) befindlichen Klemmfläche (12) zum randseitigen Einspannen der Materialbahn (21) zusammenwirkt.

5. Kluppeneinheit nach Anspruch 4, **dadurch gekennzeichnet, dass** der Klemmhebel-Magnet (20, 33) an der Nabe (14) des Klemmhebels (2) angeordnet ist.

6. Kluppeneinheit nach Anspruch 5, **gekennzeichnet durch** die folgenden Merkmale:
a) der Klemmhebel (2) ist mit seiner Nabe (14) auf einer Tragachse (13) gelagert, die sich drehfest an dem Basisteil (1) befindet;
b) der Basisteil-Magnet (19) befindet sich im Inneren der Tragachse (13);
c) der Klemmhebel-Magnet (20) ist in die Nabe (14) eingelassen.

7. Kluppeneinheit nach Anspruch 5, **dadurch gekennzeichnet, dass** der Basisteil-Magnet (32) in radialer Richtung außerhalb des Drehweges (34) des Klemmhebel-Magneten (33) an dem Basisteil (1) angeordnet ist.

8. Fördereinrichtung zum Transportieren von Materialbahnen (21), mit paarweise angeordneten endlosen Längsförderern (25), an denen sich Kluppeneinheiten zum randseitigen Halten der Materialbahnen (21) befinden, **dadurch gekennzeichnet, dass** die Kluppeneinheiten nach einem der Ansprüche 1 bis 7 ausgebildet sind.

9. Spannrahmen zum Querdehnen von Kunststoff-Folien, mit einer Fördereinrichtung, an der sich Kluppeneinheiten befinden, durch welche die Kunststoff-Folien an ihren Seitenrändern erfasst und einer Zugkraft ausgesetzt werden, die quer zu ihrer Transportrichtung verläuft, **gekennzeichnet durch** Kluppeneinheiten gemäß einem der Ansprüche 1 bis 7 und eine Fördereinrichtung gemäß Anspruch 8.

## Claims

1. Clip unit for arrangement on a conveyor device in the processing of material webs (21), with a base part (1), with a clamp lever (2) pivotably supported on the base part (1), which clamp lever selectively takes up its clamping position or its release position by pivoting displacement, whereby the material web (21) is clamped tightly on the base part (1) only in the clamping position and additionally magnetically produced forces take effect between the base part (1) and the clamp lever (2), **characterized in that** at least one clamp lever magnet (20, 33) is arranged on the clamp lever (2) and at least one base part magnet (19, 32) is arranged on the base part (1), and that the rotation path (24, 34) of the clamp lever magnet (20, 33) during the pivoting displacement of the clamp lever (2) passes without contact along the base part magnet (19, 32) whereby the clamp lever magnet (20, 33) and the base part magnet (19, 32) magnetically repel one another and the maximum of the repulsion force is positioned in the area between the clamping position and the release position.

2. Clip unit according to claim 1, **characterized in that** the clamp lever magnet (20, 33) and base part magnet (19, 32) are embodied as permanent magnets.

3. Clip unit according to claim 1 or 2, **characterized in that** the clamp lever (2) is pivotably displaceable externally by a mechanical adjusting element with overtraveling of the magnetic forces.

4. Clip unit according to one of the claims 1 to 3, **characterized in that** the clamp lever (2) is embodied as a two-armed lever with a hub (14), an operating arm (15) forming the mechanical adjusting element and an effector arm (16) that comprises a clamp surface (18) on an end side, which clamp surface cooperates with a clamp surface (12) located on the base part (1) for the edge-side clamping-in of the material web (21).

5. Clip unit according to claim 4, **characterized in that** the clamp lever magnet (20, 33) is arranged on the hub (14) of the clamp lever (2).

6. Clip unit according to claim 5, **characterized by** the following features:
a) the clamp lever (2) is supported with its hub (14) on a carrier axle (13), which is located rotationally fixedly on the base part (1);
b) the base part magnet (19) is located in the interior of the carrier axle (13);
c) the clamp lever magnet (20) is embedded in the hub (14).

7. Clip unit according to claim 5, **characterized in that** the base part magnet (32) is arranged on the base part (1) in the radial direction outside of the rotation path (34) of the clamp lever magnet (33).

8. Conveyor device for the transporting of material webs (21), with pair-wise arranged endless longitudinal conveyors (25) on which clip units for the edge-side holding of the material webs (21) are located, **characterized in that** the clip units are embodied according to one of the claims 1 to 7.

9. Tenter frame for the transverse stretching of plastic films, with a conveyor device on which clip units are located, by which the plastic films are grasped on their side edges and subjected to a tension force, which extends transversely to its transport direction, **characterized by** clip units according to one of the claims 1 to 7 and a conveyor device according to claim 8.

## Revendications

1. Ensemble pince destiné à être monté sur un dispositif de transport lors du traitement de bandes de matière (21), présentant une partie de base (1), dotée d'un levier de serrage (2) monté pivotant sur la partie de base (1), qui occupe par basculement au choix sa position de serrage ou sa position de libération, la bande de matière (21) n'étant coincée que dans la position de serrage sur la partie de base (1) et des forces générées de façon magnétique agissant en supplément entre la partie de base (1) et le levier de serrage (2),
**caractérisé en ce qu'**au moins un aimant de levier de serrage (20, 33) est disposé sur le levier de serrage (2) et au moins un aimant de partie de base (19, 32) est disposé sur la partie de base (1) et **en ce que** le parcours de rotation (24, 34) de l'aimant de levier de serrage (20, 33) passe sans contact en longeant l'aimant de partie de base (19, 32) lors du basculement du levier de serrage (2), l'aimant de levier de serrage (20, 33) et l'aimant de partie de base (19, 32) se repoussant mutuellement au plan magnétique et le maximum de la force de répulsion étant situé dans la zone entre la position de serrage et la position de libération.

2. Ensemble pince selon la revendication 1, **caractérisé en ce que** l'aimant de levier de serrage (20, 33) et l'aimant de partie de base (19, 32) sont conçus comme des aimants permanents.

3. Ensemble pince selon la revendication 1 ou 2, **caractérisé en ce que** le levier de serrage (2) peut être basculé par un élément de réglage mécanique par l'extérieur en surmodulant les forces magnétiques.

4. Ensemble pince selon l'une quelconque des revendications 1 à 3, **caractérisé en ce que** le levier de serrage (2) est conçu sous forme de levier à deux bras avec un moyeu (14), un arbre d'actionnement (15) formant l'élément de réglage mécanique et un bras actif (16), qui présente côté extrémité une surface de serrage (18) qui coopère avec une surface de serrage (12) se trouvant sur la partie de base (1) pour la fixation côté bord de la bande de matière (21).

5. Ensemble pince selon la revendication 4, **caractérisé en ce que** l'aimant de levier de serrage (20, 33) est disposé sur le moyeu (14) du levier de serrage (2).

6. Ensemble pince selon la revendication 5, **caractérisé par** les caractéristiques suivantes :
a) le levier de serrage (2) est monté avec son moyeu (14) sur un axe porteur (13) qui se trouve de façon solidaire en rotation sur la partie de base (1) ;
b) l'aimant de partie de base (19) se trouve à l'intérieur de l'axe porteur (13) ;
c) l'aimant de levier de serrage (20) est emboîté dans le moyeu (14).

7. Ensemble pince selon la revendication 5, **caractérisé en ce que** l'aimant de partie de base (32) est disposé dans le sens radial en dehors du parcours de rotation (34) de l'aimant de levier de serrage (33) sur la partie de base (1).

8. Dispositif de transport pour le transport de bandes de matière (21), présentant des convoyeurs longitudinaux (25) continus disposés par paires, sur lesquels se trouvent des ensembles pinces pour le maintien côté bord des bandes de matériau (21), **caractérisé en ce que** les ensembles pinces sont conçues selon l'une quelconque des revendications 1 à 7.

9. Cadre tendeur pour l'allongement transversal de film plastique, comprenant un dispositif de transport, sur lequel se trouvent des ensembles pinces, par lesquels les films plastique sont saisis sur leurs bords latéraux et sont exposés à une force de traction qui agit transversalement à leur sens de transport, **caractérisé par** des ensembles pinces selon l'une quelconque des revendications 1 à 7 et un dispositif de transport selon la revendication 8.
